(19) Europäisches Patentamt
European Patent Office
Office européen des brevets

(11) **EP 1 231 297 B1**

(12) **EUROPEAN PATENT SPECIFICATION**

(45) Date of publication and mention
of the grant of the patent:
**30.03.2005 Bulletin 2005/13**

(51) Int Cl.[7]: **C23F 11/173**, C02F 5/10,
C02F 5/14, F28F 19/04,
C09D 171/00

(21) Application number: **02002133.3**

(22) Date of filing: **29.01.2002**

(54) **Treatment of metal substrata with (per)fluoropolyether compounds**

Behandlung von metallischen Substraten mit (per)fluoropolyätherverbindungen

Traitement des substrats métalliques avec des composés (per)fluoropolyéther

(84) Designated Contracting States:
**DE FR GB IT**

(30) Priority: **08.02.2001 IT MI010251**

(43) Date of publication of application:
**14.08.2002 Bulletin 2002/33**

(73) Proprietor: **Solvay Solexis S.p.A.**
**20121 Milano (IT)**

(72) Inventors:
• **De Dominicis, Mattia**
**35100 Padova (IT)**
• **Carignano, Gabriella**
**20020 Arese, Milano (IT)**

(74) Representative: **Sama, Daniele, Dr.**
**Sama Patents,**
**Via G.B. Morgagni, 2**
**20129 Milano (IT)**

(56) References cited:
**EP-A- 0 844 265**          **WO-A-99/51612**
**US-A- 3 306 855**          **US-A- 3 810 874**
**US-A- 4 144 185**

**EP 1 231 297 B1**

**Description**

The present invention relates to the use of compounds for the treatment of metal substrata or their alloys to confer anti-calcar properties.

Specifically the invention relates to the application on metal surfaces of specific (per)fluoropolyether compounds able to confer anti-calcar properties.

The technical problem to be solved is to minimize the calcar deposition on metal surfaces or to allow an easy removal of the calcar deposited on metal surfaces, without substantially changing the metal coating and allowing the metal to perform with the maximum efficiency, for example in the case of heat exchangers. The metal surfaces treated with the compounds of the invention, maintain the anti-calcar properties in the time, even after a high number of deposition and removal cycles of calcar. With easy removal of calcar it is meant that this last can be removed by a simple washing carried out with a running water flow at room temperature.

It is known that the hot water flowing in the internal pipes of heat exchangers, tends to deposit calcar. The calcar deposited on the pipe metal surface tends to form an internal layer which in the time hinders more and more the water flow increasing the load losses. Besides, the calcar deposit strongly limits the thermal exchange between the heat source outside the pipe and the water inside the pipe.

To remove the calcar deposited on metal surfaces, commercial diluted acid formulations are commonly used which allow to dissolve the calcar. Such chemical treatment has the drawback to be aggressive towards the metal surfaces since it performs as corrosion promoter. Therefore, after a limited number of these treatments, the metal equipment must be substituted. Besides, said treatment can be used for a limited number of times since owing to the corrosion, metal oxide particles form, which are washed. For example in the case of heat exchangers or pipes, said phenomenon implies a pollution of flowing fluids.

Alternatively, to eliminate the calcar deposited, when the mechanical equipment allows it, abrasive systems, such as for example brushes or capture systems can be used to avoid the deposition of solid substances inside metal heat exchangers.

In USP 4,489,776 mechanical elements for the cleaning of heat exchangers and to remove the solid substances deposited inside pipes are described. The cleaning system is formed by capture points placed at the ends of the pipes and by brushes which move inside the pipes. Such cleaning system shows the drawback to cause abrasion of the metal itself and besides to need a periodic maintenance.

USP 4,383,346 relates to cleaning elements using a rotating action to clean the inside of heat exchanger pipes. The system includes a spoon-shaped rubber body and an abrasive layer of granular elements fixed to the rubber body by means of an adhesive film. Also in this case, the cleaning system shows the drawback to cause abrasion of the metal itself and besides to need a periodic maintenance.

The need was therefore felt to have available a method to obtain an easy removal of the calcar deposited on metal surfaces, without having the above mentioned drawbacks of the cleaning systems used in the prior art.

The Applicant has surprisingly and unexpectedly found that it is possible to solve the above technical problem using specific perfluoropolyether compounds to confer to metal substrata and their alloys anti-calcar properties.

An object of the invention is therefore the use in the treatment of metal substrata and their alloys to form coatings on said substrata, of mono- and bifunctional (per)fluoropolyether compounds having the following structures:

$$[R_f\text{-}CFY\text{-}L\text{-}O]_m P(O) (O^- Z^+)_{3-m} \qquad (A)$$

$$(O^- Z^+)_2 P(O)[O\text{-}L\text{-}YFC\text{-}O\text{-}R_f\text{-}CFY\text{-}L\text{-}O\text{-}P(O)(O^- Z^+)]_{m'}\text{-}$$

US 3,306,855 discloses the use of mono-functional (per)fluoropolyether phosphate derivatives as additives in fluorinated lubricating oils for inhibiting corrosion and rusting.

US 3,810,874 discloses various fluorinated compounds having various application among which the use as anticorrosion agent. Said compounds consist of a bifunctional (per) fluoropolyether chain and of two polyfunctional terminal end groups of formula $-X_a Y Z_b$, among the substituents being $X_a = -CONH-$, Y=alkylene, $Z_b = -SiR'_d Q_{3-d}$.

EP 844,265 discloses fluoropolymers consisting of a monofunctional perfluoropolyether chain and of an organo-silicon chain formed by at least 2 organo-silicon repeating units located at one end of the fluoropolymer molecula, said fluoropolymers being able to confer antifouling properties to substrates, in particular to prevent the deposition of oily fouling matter and deposits of ice.

$$- [O-L-YFC-O-R_f-CFY-L-O]P(O) (O^-Z^+)_2 \qquad (B)$$

$$R_f-CFY-L-W \qquad (C)$$

$$W-L-YFC-O-R_f-CFY-L-W \qquad (D)$$

wherein:

m' is an integer from 0 to 20, preferably from 0 to 4;
L is an organic group selected from $-CH_2-(OCH_2CH_2)_n-$,
$-CO-NR'-(CH_2)_q-$, with R' = H or $C_1-C_4$ alkyl;
n = 0-8, preferably 1-3, q = 1-8, preferably 1-3;
Z = H, alkaline metal or $NR_4$ group with R = H or $C_1-C_4$ alkyl;
Y = F, $CF_3$;
m = 1, 2, 3, preferably 1, 2;
W is a group $-Si(R_1)_\alpha(OR_2)_{3-\alpha}$ with $\alpha$ = 0, 1, 2, $R_1$ and $R_2$ equal to or different from each other are $C_1-C_6$ alkyl groups optionally containing one or more ether O, $C_6-C_{10}$ aryl groups, $C_7-C_{12}$ alkyl-aryl or aryl-alkyl groups;
Rf has a number average molecular weight in the range 350-8,000, preferably 500-3,000 and comprises repeating units having at least one of the following structures, statistically placed along the chain:

$$(CFXO), (CF_2CF_2O), (CF_2CF_2CF_2O), (CF_2CF_2CF_2CF_2O),$$

$$(CR_4R_5CF_2CF_2O), (CF(CF_3)CF_2O), (CF_2CF(CF_3)O),$$

wherein

X = F, $CF_3$;
$R_4$ and $R_5$, equal to or different from each other, are selected from H, Cl, or perfluoroalkyl having from 1 to 4 carbon atoms.

In particular Rf can have one of the following structures:

1) $-(CF_2O)_{a'}-(CF_2CF_2O)_{b'}-$
with a'/b' in the range 0.5-2, extremes included, a' and b' being integers such as to give the above molecular weight;
2) $-(C_3F_6O)_r-(C_2F_4O)_b-(CFXO)_t-$
with r/b = 0.5-2.0; (r+b)/t is comprised between 10-30, b, r and t being integers such as to give the above molecular weight, X has the above meaning;
3) $-(C_3F_6O)_r-(CFXO)_{t'}-$
t' can be 0;
when t' is different from 0 then r'/t' = 10-30,
r' and t' being integers such as to give the above molecular weight; X has the above meaning;
4) $-(OCF_2CF(CF_3))_z-OCF_2(R'f)_y-CF_2O- (CF(CF_3)CF_2O)_z-$
wherein z is an integer such that the molecular weight is the above one;
y is an integer between 0 and 1 and R'f is a fluoro-alkylene group having for example 1-4 carbon atoms;
5) $-(OCF_2CF_2CR_4R_5)_q-OCF_2(R'f)_y-CF_2O- (CR_4R_5CF_2CF_2O)_s-$
wherein:

q and s are integers such that the molecular weight is the above one;
$R_4$, $R_5$, R'f, y have the above meaning;

6) $-(C_3F_6O)_{r'''}(CFXO)_{t'''}-OCF_2(R'f)_y-CF_2O(CF(CF_3)CF_2O)_{r'''} (CFXO)_{t'''}-$
wherein r'''/t''' = 10-30,

r''' and t''' being integers such as to give the above molecular weight;
R'f and y having the above meaning.

In the above formulas:

$$-(C_3F_6O)-$$

can represent units of formula

$$-(CF(CF_3)CF_2O)-$$

and/or

$$-(CF_2-CF(CF_3)O)-$$

In the structures (A) and (C) wherein the perfluoropolyether compound is monofunctional, the end group of $R_f$ is of the T-O- type, wherein T is a (per)fluoroalkyl group selected from: $-CF_3$, $-C_2F_5$, $-C_3F_7$, $-CF_2Cl$, $-C_2F_4Cl$, $-C_3F_6Cl$; optionally one or two F atoms, preferably one, can be substituted by H.

Binary, ternary and quaternary mixtures of the above compounds (A), (B), (C) and (D) can also be used. Preferably mixtures of compounds (C) and (D) are used.

The mentioned fluoropolyethers are obtainable by well known processes of the prior art, see for example the following patents:

USP 3,665,041, 2,242,218, 3,715,378, and EP 239,123. The functionalized fluoropolyethers having a hydroxyl termination are obtained for example according to EP 148,482, USP 3,810,874.

The preparation of the monofunctional (per)fluoropolyether phosphates of structure (A) can be carried out by reacting the corresponding (per)fluoroalkylenoxides hydroxy-ended with $POCl_3$. To obtain the monoester derivative (m = 1) it is necessary to use a molar ratio $POCl_3$/hydroxy-ended compound in the range 2/1-10/1, preferably 6/1-8/1. The reaction is carried out by slowly dropping the hydroxy-ended compound in $POCl_3$, at a temperature between 50° and 100°C, preferably between 70° and 80°C, eliminating the HCl vapours in a KOH trap. The $POCl_3$ excess is removed by distillation while the formed adduct is hydrolyzed by $H_2O$. The separation of the obtained compound is carried out by extraction with a suitable organic solvent, such as for example ethyl acetate. The compound of structure (A) with m=1 is separated from the organic phase according to known techniques, for example by solvent evaporation.

To obtain the biester derivative (m = 2) of formula (A) one proceeds as in the monoester case with the difference that after the $POCl_3$ removal, the reaction adduct is further reacted with an equimolar amount of hydroxy-ended compound. Subsequently hydrolysis is carried out and one proceeds as above described.

To obtain the triester derivative (m = 3) of formula (A) one proceeds as in the monoester case with the difference that after the $POCl_3$ removal, the reaction adduct is further reacted with a bimolar amount of hydroxy-ended compound. Subsequently hydrolysis is carried out and one proceeds as above described.

The preparation of the bifunctional (per)fluoropolyether phosphates of structure (B) can be carried out by reacting the corresponding (per)fluoroalkylenoxides di-hydroxy-ended with $POCl_3$. To obtain the derivative with m' = 0, it is necessary to use a molar ratio $POCl_3$/di-hydroxy-ended compound in the range 4/1-20/1, preferably 12/1-16/1. The reaction is carried out by slowly dropping the hydroxy-ended compound in $POCl_3$, at a temperature in the range 50°-100°C, preferably 70°-80°C, eliminating the HCl vapours in a KOH trap. The $POCl_3$ excess is removed by distillation while the formed adduct is hydrolyzed by $H_2O$. The separation of compound (B) with m' = 0 is carried out by extraction with a suitable organic solvent, such as for example ethyl acetate. The compound is separated from the organic phase according to known techniques, for example by solvent evaporation.

To obtain the compound of structure (B) with m' > 0, one proceeds as in the case m' = 0 with the difference that after the $POCl_3$ removal, the reaction adduct is further reacted with variable amounts of di-hydroxy-ended compound. Subsequently hydrolysis is carried out and the above described procedure is performed.

The (per)fluoropolyether silanes of structure (C) and (D) are known compounds, and can be prepared according to, for example, USP 4,094,911, USP 4,818,619.

The Applicant has surprisingly found that by using the (per)fluoropolyether compounds of the invention for the treatment of metals or their alloys, a coating having good anti-calcar properties, is obtained, i.e. the calcar present in a running water flow does not succeed in adhering to the metal surfaces when they are treated with the perfluoropolyther compounds of the invention. Also in the case of calcar deposit coming from stagnant water, the calcar is easily removable from the metal surface by simply using a water flow. The invention allows to avoid the use of abrasive systems, such as brushes, and of chemical systems such as acid solutions which can lead to corrosion phenomena of the metal surface.

The perfluoropolyether silanes of structures (C) and (D) are applied using formulations with solvent, solvent-water admixtures or prevailingly aqueous formulations. The solvents can be polar, for example alcohols and glycols, fluorinated solvents, for example perfluoropolyether, hydroperfluoropolyether and perfluorocarbon solvents, or hydrocarbon solvents. The concentration of the perfluoropolyether silanes present in the formulation can be in the range 0.01-15% by weight, preferably 0.1-5% by weight. In the formulation also a hydrolysis catalyst can be present, such as an acid or a base in a variable ratio by weight from 1/10 to 1/1 with the perfluoropolyether silane, preferably in the range 1/4-1/1. As acids the perfluoropolyether phosphates can be used, for example the compounds of structure (A) and (B), or other acids such as for example the acetic acid. However it is preferred to use as acid catalysts, those having a $pK_a$ comparable with that of the acetic acid to avoid the chemical attack on the metal. As bases ammonia and aliphatic or aromatic amines can be used. An amount of water such to favour the hydrolysis reactions and the condensation of the perfluoropolyether silanes can be introduced in the formulation.

The treatment can occur by using the usual application techniques such as for example dipping, spin-coating, spraying, padding and brushing. After the application of the formulation containing the perfluoropolyether silanes of structure (C) and (D) a thermal treatment of the surface can follow at a temperature in the range 60-250°C, preferably 80-200°C for a time comprised betwen few minutes and 180 minutes, preferably between 10 and 30 minuti. Such thermal treatment allows a quick evaporation of the solvent and favours the further polycondensation of the perfluoropolyether silanes. When it is desired to avoid the thermal treatment it is generally necessary the presence of an acid or basic catalyst in the formulation. Besides in this case, it is necessary to wait for at least 24 hours to obtain the crosslinking of the compounds (C) and (D) of the invention.

The perfluoropolyether phosphates of structure (A) and (B) are applied using aqueous formulations or formulations having a polar solvent. The PFPE phosphates of structure (A) and (B) can be used both under the form of acids and as salts, for example ammonium salts. The formulation contains an amount by weight of perfluoropolyether phosphate in the range 0.1-10% by weight, preferably 0.5-5%. In this case no thermal treatment is necessary, unless one wants to speed up the evaporation of the solvent and/or water.

Examples of application of said anti-calcar treatments are in heat-exchangers, i.e. in the internal pipes of the exchangers wherein hot water flows, which tends to deposit calcar. As said, the calcar tends to form an internal layer which can partially obstruct the water flow, increasing the load losses and besides it strongly limits the thermal exchange between the heat source outside the pipe and the water inside the pipe.

Other metal substrata to which the perfluoropolyether compounds of the invention can be applied to confer anti-calcar properties, are the internal pipes of aqueducts, the metal part containing the water of the coffee-machines, the iron plates and the metal parts of taps, showers and sinks.

As said, the compounds of the invention minimize the calcar deposition on metal surfaces or allow an easy removal of the calcar deposited on metal surfaces, without substantially modifying the protective coating. In practice, the metal surfaces treated with the compounds of the invention maintain the anti-calcar properties in the time, even after a high number of deposition and removal cycles. Therefore from the industrial point of view the compounds of the invention can be used to treat the internal parts of the exchangers wherein running water continuously flows without having any calcar deposit on the exchanger surfaces. This represents a remarkable advantage since exchangers maintain unaltered their exchange efficiency.

Besides, it has been found by the Applicant that the compounds of the invention, preferably those of structure (C) and (D) can be used to obtain thin coatings on metal substrata having anticorrosive properties. Application examples are in particular in the treatment of metal surfaces having a low melting point alternatively to PTFE-based coatings. In fact PTFE-based coatings are carried out at very high temperatures at which metals tend easily to get deformed. With the compounds of the invention, these drawbacks do not occur since the treatments are carried out at much lower temperatures, and of the maximum order of 150°-200°C in the case of crosslinking of the compounds (C) and (D) by thermal treatment. An example of anti-corrosive treatment is that which can be carried out on the metal parts of galvanic cells, for example electrodes. It has been noticed that the treatment with the compounds of the invention (C) and (D) can be carried out in very thin layers with respect to the conventionally used compounds. In the case of galvanic cells, there is not a substantial change of the galvanic cell efficiency compared with the case of untreated materials.

The present invention will be better illustrated by the following Examples, which have a merely indicative but not limitative purpose of the scope of the invention itself.

**EXAMPLES**

Characterization

As metal substratum copper plates having 50x50 mm sizes are used.

The copper plates before the treatment with the fluorinated compounds of the invention are subjected to pickling using a hydrochloric acid solution at 5% by weight. Then washings are carried out with solvents, such as for example ethanol, hexane, to remove the impurities from the metal surface.

The plates are dipped for about 3 hours in a saturated calcium bicarbonate solution brought to the boiling temperature. Calcium carbonate (calcar) forms which tends to deposit on the copper plates. The formation of a white deposit on the metal is visually observed. The calcar presence on the surface is shown by a lowering of the contat angle values.

In the following Examples the calcar removal has been carried out by simple washing of the treated specimens with running water. Then the specimens are dried in a stove at the temperature of 100°C for some minutes.

The removal of the calcar deposit from the copper plate is shown by the return to a high contact angle value towards water, typical of the presence on the surface of fluorinated compounds.

Contact angle measurement

To evaluate the adhesion of the formulation applied to the copper plate and the probable deposition/removal of calcar from the copper plate, static contact angle measurements towards water are carried out by the G10 (KRUSS) instrument at the temperature of 20°C.

It is known that the presence on the metal surface of fluorinated compounds is shown by high values of contact angle (higher than 100°). Threfore, the presence of calcar on the metal surface is indicated by a meaningful lowering of the contact angle values.

For each example, 3 values $\theta_1, \theta_2, \theta_3$ relating to the static contact angle are indicated, having the following meaning:

$\theta_1$ = value of the contact angle before the calcar deposition on the copper plate;
$\theta_2$ = value of the contact angle after the calcar deposition on the copper plate;
$\theta_3$ = value of the contact angle after the washing with running water of the copper plate.

Corrosion evaluation method

Copper plates having 50x50 mm sizes are used as metal substratum.

The copper plates before the treatment with the compounds of the invention are pickled with hydrochloric acid at 5% by weight. Subsequently the plate washing is carried out as above described to remove possible impurities from the metal surface.

After drying in a stove at a temperature of about 100°C for 10 minutes, the plates are treated with the compounds of the invention.

After the treatment, the plates are put in contact with air having a high humidity degree (relative humidity = 80%) for a time equal to 24 hours and 1 month.

Then the aspect of the plates is evaluated and the residue corrosion degree is measured according to the ASTM Copper Strip Corrosion Standards (ASTM method D130/IP154).

EXAMPLE 1 (comparative)

Untreated copper

A copper plate having 50x50 mm sizes is dipped into the above mentioned calcium bicarbonate solution without carrying out any pre-treatment with the compounds of the invention.

The values relating to the contact angle are shown in Table 1. The $\theta_3$ value shows that the calcar once deposited is not removed by a simple washing with water.

EXAMPLE 2

A copper plate having 50x50 mm sizes is treated by dipping at a dipping rate equal to 0.526 mm/sec. with 30 ml of a formulation formed by:

- 1% by weight with respect to the total weight of the formulation of an admixture of perfluoropolyether silanes having structure (C) and (D) in a weight ratio 3/1:

$$Cl(C_3F_6O)_pCF_2\text{-}CONH(CH_2)_3Si(OC_2H_5)_3 \text{ wherein p = 2-5} \qquad (C)$$

$$(C_2H_5O)_3Si(CH_2)_3HNOC\text{-}CF_2O(CF_2CF_2O)_m(CF_2O)_nCF_2\text{-}$$

$$CONH(CH_2)_3Si(OC_2H_5)_3$$

wherein

$$n = 2\text{-}4, m = 2\text{-}6 \qquad (D)$$

- 94% by weight of isopropyl alcohol;
- 4% by weight of water;
- 1% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment with the fluorinated compounds of the invention, the copper plate is dipped in the above calcium bicarbonate solution.

The values relating to the contact angle are shown in Table 1. The $\theta_3 = \theta_1$ value shows that the calcar once deposited is effectively removed by a simple washing with water.

EXAMPLE 3

A copper plate having 50x50 mm sizes is treated by dipping at a dipping rate equal to 0.526 mm/sec with 30 ml of a formulation formed by:

- 5% by weight with respect to the total weight of the formulation of an admixture of perfluoropolyether silanes having structure (C) and (D) in a weight ratio 3/1:

$$Cl(C_3F_6O)_pCF_2\text{-}CONH(CH_2)_3Si(OC_2H_5)_3 \text{ wherein p = 2-5} \qquad (C)$$

$$(C_2H_5O)_3Si(CH_2)_3HNOC\text{-}CF_2O(CF_2CF_2O)_m(CF_2O)_nCF_2\text{-}$$

$$CONH(CH_2)_3Si(OC_2H_5)_3$$

wherein

$$n = 2\text{-}4, m = 2\text{-}6 \qquad (D)$$

- 70% by weight of isopropyl alcohol;
- 20 by weight of water;
- 5% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment, the copper plate is dipped in the above calcium bicarbonate solution.

The values relating to the contact angle are shown in Table 1. The $\theta_3 = \theta_1$ value shows that the calcar once deposited is effectively removed by a simple washing with water.

EXAMPLE 4

A copper plate having 50x50 mm sizes is treated by dipping at a dipping rate equal to 0.526 mm/sec with 30 ml of a formulation formed by:

- 5% by weight with respect to the total weight of the formulation of a perfluoropolyether silane having structure (D):

$$(C_2H_5O)_3Si(CH_2)_3HNOC-CF_2O(CF_2CF_2O)_m(CF_2O)_nCF_2-$$

$$CONH(CH_2)_3Si(OC_2H_5)_3$$

wherein

$$n = 2\text{-}4, \ m = 2\text{-}6 \tag{D}$$

- 75% by weight of isopropyl alcohol;
- 19% by weight of water;
- 1% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

EXAMPLE 5

A copper plate having 50x50 mm sizes is treated by dipping at a dipping rate equal to 0.526 mm/sec with 30 ml of a formulation formed by:

- 5% by weight with respect to the total weight of the formulation of a perfluoropolyether silane having structure (C):

$$Cl(C_3F_6O)_pCF_2\text{-}CONH(CH_2)_3Si(OC_2H_5)_3 \ \text{wherein} \ p = 2\text{-}5 \tag{C}$$

- 65% by weight of isopropyl alcohol;
- 29% by weight of water;
- 1% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

EXAMPLE 6

A copper plate having 50x50 mm sizes is treated by dipping at a dipping rate equal to 0.526 mm/sec with 30 ml of a formulation formed by:

- 1% by weight with respect to the total weight of the formulation of a bifunctional perfluoropolyether (PFPE) phosphate which is a mixture of the structures reported below:

1) $(HO)_2(O)PO(C_2H_4O)_pCH_2CF_2O(C_2F_4O)_n(CF_2O)_mCF_2CH_2(OC_2H_4)_pOP(O)(OH)_2$

2) $[(HO)_2(O)PO(C_2H_4O)_pCH_2CF_2O(C_2F_4O)_n(CF_2O)_mCF_2CH_2(OC_2H_4)_pO]_2P(O)OH$

wherein

$$p = 1\text{-}4, \ n = 2\text{-}4, \ m = 2\text{-}6$$

wherein the compound 1) represents the 90% by moles and the compound 2) the 10% by moles;
- 10% by weight of isopropyl alcohol;
- 89% by weight of water.

The copper specimen is dipped in the formulation for 10 minutes and subsequently heated at the temperture of 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

EXAMPLE 7

A copper plate having 50x50 mm sizes is treated by dipping at a dipping rate equal to 0.526 mm/sec with 30 ml of a formulation formed by:

- 5% by weight with respect to the total weight of the formulation of a bifunctional perfluoropolyether (PFPE) phosphate which is a mixture of the structures reported below:

1) $(HO)_2(O)PO(C_2H_4O)_pCH_2CF_2O(C_2F_4O)_n(CF_2O)_mCF_2CH_2(OC_2H_4)_pOP(O)(OH)_2$

2) $[(HO)_2(O)PO(C_2H_4O)_pCH_2CF_2O(C_2F_4O)_n(CF_2O)_mCF_2CH_2(OC_2H_4)_pO]_2P(O)OH$

wherein

$$p = 1\text{-}4, \ n = 2\text{-}4, \ m = 2\text{-}6$$

wherein the compound 1) represents the 90% by moles and the compound 2) the 10% by moles;

- 70% by weight of isopropyl alcohol;
- 25% by weight of water.

The copper specimen is dipped in the formulation for 10 minutes and subsequently heated at the temperature of 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

EXAMPLE 8

A copper plate having 50x50 mm sizes is treated by dipping at a dipping rate equal to 0.526 mm/sec with 30 ml of a formulation formed by:

- 3.3% by weight with respect to the total weight of the formulation of an ammonium salt of bifunctional perfluoropolyether (PFPE) phosphate which is a mixture of the structures reported below:

$$1) \quad (NH_4O)_2(O)PO(C_2H_4O)_pCH_2CF_2O(C_2F_4O)_n(CF_2O)_mCF_2CH_2(OC_2H_4)_p-$$

$$-OP(O)(ONH_4)_2$$

$$2) \quad [(NH_4O)_2(O)PO(C_2H_4O)_pCH_2CF_2O(C_2F_4O)_n(CF_2O)_mCF_2CH_2(OC_2H_4)_pO]_2-$$

$$-P(O)ONH_4$$

wherein

$$p = 1\text{-}4, \ n = 2\text{-}4, \ m = 2\text{-}6$$

wherein the compound 1) represents the 90% by moles and the compound 2) the 10% by moles;
- 96.7% by weight of water.

The copper specimen is dipped in the formulation for 10 minutes and subsequently heated at the temperature of 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

EXAMPLE 9

A copper plate having 50x50 mm sizes is treated by dipping at a dipping rate equal to 0.526 mm/sec with 30 ml of a formulation formed by:

- 1% by weight with respect to the total weight of the formulation of a bifunctional perfluoropolyether (PFPE) phosphate which is a mixture of the structures reported below:

$$1) \quad (HO)_2(O)PO(C_2H_4O)_pCH_2CF_2O(C_2F_4O)_n(CF_2O)_mCF_2CH_2(OC_2H_4)_p-$$

$$-OP(O)(OH)_2$$

$$2) \quad [(HO)_2(O)PO(C_2H_4O)_pCH_2CF_2O(C_2F_4O)_n(CF_2O)_mCF_2CH_2(OC_2H_4)_pO]_2-$$

-P(O)OH

wherein

$$p = 1\text{-}4, n = 2\text{-}4, m = 2\text{-}6$$

wherein the compound 1) represents the 60% by moles and the compound 2) the 40% by moles;

- 99% by weight of isopropyl alcohol.

The copper specimen is dipped in the formulation for 10 minutes and subsequently heated at the temperature of 160°C for 12 minutes.

After the treatment with the fluorinated compounds of the invention, the copper plate is dipped in the above calcium bicarbonate solution.

The values relating to the contact angle are shown in Table 1. The $\theta_3 \sim \theta_1$ value shows that the calcar once deposited is effectively removed by a simple washing with water.

TABLE 1

|  | $\theta_1$ | $\theta_2$ | $\theta_3$ |
|---|---|---|---|
| Example 1 (Comp) | 78° | 40° | 54° |
| Example 2 | 110° | 80° | 110° |
| Example 3 | 110° | 92° | 110° |
| Example 4 | 103° | 70° | 100° |
| Example 5 | 112° | 75° | 110° |
| Example 6 | 113° | 60° | 109° |
| Example 7 | 115° | 90° | 110° |
| Example 8 | 116° | 68° | 110° |
| Example 9 | 104° | 70° | 100° |

EXAMPLE 10 (comparative)

Untreated copper

After the above washing to remove possible impurities, the copper plates are put in contact with air having a high humidity degree (relative humidity = 80%).

One proceeds to the visual evaluation of the plate to point out corrosion according to the ASTM D130/IP154 standard after t = 1 day and t = 1 month. The results are reported in Table 2.

EXAMPLE 11

A copper plate having 50x50 mm sizes is treated by dipping at a dipping rate equal to 0.526 mm/sec with 30 ml of a formulation formed by:

- 1% by weight with respect to the total weight of the formulation of a mixture of perfluoropolyether silanes having structure (C) and (D) in a weight ratio 3/1:

$$Cl(C_3F_6O)_p CF_2 - CONH(CH_2)_3 Si(OC_2H_5)_3 \text{ wherein } p = 2\text{-}5 \qquad (C)$$

$$(C_2H_5O)_3 Si(CH_2)_3 HNOC\text{-}CF_2O(CF_2CF_2O)_m(CF_2O)_n CF_2\text{-}$$

$$CONH(CH_2)_3Si(OC_2H_5)_3$$

wherein

$$n = 2\text{-}4,\ m = 2\text{-}6 \hspace{4cm} (D)$$

- 94% by weight of isopropyl alcohol;
- 4% by weight of water;
- 1% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment with the perfluoropolyether compounds of the invention, the copper plates are put in contact with air having a high humidity degree (relative humidity = 80%).
One proceeds to the visual evaluation of the plate to point out corrosion according to the above ASTM standard after 24 hours and 1 month. The results are reported in Table 2.

EXAMPLE 12

A copper plate having 50x50 mm sizes is treated by dipping at a dipping rate equal to 0.526 mm/sec with 30 ml of a formulation formed by:

- 5% by weight with respect to the total weight of the formulation of a mixture of perfluoropolyether silanes having structure (C) and (D) in a weight ratio 3/1:

$$Cl(C_3F_6O)_pCF_2\text{-}CONH(CH_2)_3Si(OC_2H_5)_3\ \text{wherein}\ p = 2\text{-}5 \hspace{2cm} (C)$$

$$(C_2H_5O)_3Si(CH_2)_3HNOC\text{-}CF_2O(CF_2CF_2O)_m(CF_2O)_nCF_2\text{-}$$

$$CONH(CH_2)_3Si(OC_2H_5)_3$$

wherein

$$n = 2\text{-}4,\ m = 2\text{-}6 \hspace{4cm} (D)$$

- 70% by weight of isopropyl alcohol;
- 20% by weight of water;
- 5% by weight of acetic acid as hydrolysis catalyst.

The copper specimen is dipped in the formulation for 10 minutes and subsequently subjected to the following two-phase thermal treatment:

1) heating at 65°C for 40 minutes;
2) heating at 160°C for 12 minutes.

After the treatment with the perfluoropolyether compounds of the invention, the copper plates are put in contact with air having a high humidity degree (relative humidity = 80%).
One proceeds to the visual evaluation of the plate to point out corrosion according to the above ASTM standard after 24 hours and 1 month. The results are reported in Table 2.

EXAMPLE 13

A copper plate having 50x50 mm sizes is treated by dipping at a dipping rate equal to 0.526 mm/sec with 30 ml of a formulation formed by:

- 1% by weight with respect to the total weight of the formulatin of a bifunctional perfluoropolyether (PFPE) phosphate which is a mixutre of the structures reported below:

1)      $(HO)_2(O)PO(C_2H_4O)_pCH_2CH_2O(C_2F_4O)_n(CF_2O)_mCF_2CH_2(OC_2H_4)_pOP(O)(OH)_2$

2)      $[(HO)_2(O)PO(C_2H_4O)_pCH_2CF_2O(C_2F_4O)_n(CF_2O)_mCF_2CH_2(OC_2H_4)_pO]_2P(O)OH$

wherein

$$p = 1\text{-}4, \ n = 2\text{-}4, \ m = 2\text{-}6$$

wherein the compound 1) represent the 90% by moles and the compound 2) the 10% by moles;
- 10% by weight of isopropyl alcohol;
- 89% by weight of water.

The copper specimen is dipped in the formulation for 10 minutes and subsequently heated at the temperature of 160°C for 12 minutes.
After the treatment with the perfluoropolyether compounds of the invention, the copper plates are put in contact with air having a high humidity degree (relative humidity = 80%).
One proceeds to the visual evaluation of the plate to point out corrosion according to the above ASTM standard after 24 hours and 1 month. The results are reported in Table 2.

EXAMPLE 14

A copper plate having 50x50 mm sizes is treated by dipping at a dipping rate equal to 0.526 mm/sec with 30 ml of a formulation formed by:

- 5% by weight with respect to the total weight of the formulation of a bifunctional perfluoropolyether (PFPE) phosphate which is a mixutre of the structures reported below:

1)      $(HO)_2(O)PO(C_2H_4O)_pCH_2CF_2O(C_2F_4O)_n(CF_2O)_mCF_2CH_2(OC_2H_4)_pOP(O)(OH)_2$

2)      $[(HO)_2(O)PO(C_2H_4O)_pCH_2CF_2O(C_2F_4O)_n(CF_2O)_mCF_2CH_2(OC_2H_4)_pO]_2P(O)OH$

wherein

$$p = 1\text{-}4, \ n = 2\text{-}4, \ m = 2\text{-}6$$

wherein the compound 1) represents the 90% by moles and the compound 2) the 10% by moles;
- 70% by weight of isopropyl alcohol;
- 25% by weight of water.

The copper specimen is dipped in the formulation for 10 minutes and subsequently heated at the temperature of 160°C for 12 minutes.
After the treatment with the perfluoropolyether compounds of the invention, the copper plates are put in contact with air having a high humidity degree (relative humidity = 80%).

One proceeds to the visual evaluation of the plate to point out corrosion according to the above ASTM standard after 24 hours and 1 month. The results are reported in Table 2.

EXAMPLE 15

Example 11 has been repeated with the variation that the copper plate before being put in contact with humid air, is dipped in a hydrochloric acid solution at 5% by weight for about one hour. It is noticed that this further corrosive phase does not modify the results obtained in Example 11.

TABLE 2

|                      | after 24 hours | after 1 month |
|----------------------|----------------|---------------|
| Example 10 (Comp.)   | 3b             | 4a            |
| Example 11           | 1b             | 2a            |
| Example 12           | 0              | 1a            |
| Example 13           | 2a             | 3b            |
| Example 14           | 2a             | 3b            |
| Example 15           | 1b             | 2a            |
| 0 = no variation <br> 1b = light corrosion <br> 2a = moderate corrosion <br> 3b = strong corrosion <br> 4a = total corrosion | | |

## Claims

1.   Use in the treatment of metal substrata and their alloys to form coatings on said substrata, of mono- and bifunctional (per)fluoropolyether compounds having the following structures:

$$[R_f\text{-CFY-L-O}]_m P(O)(O^- Z^+)_{3-m} \qquad (A)$$

$$(O^- Z^+)_2 P(O)(O\text{-L-YFC-O-}R_f\text{-CFY-L-O-}P(O)(O^- Z^+)]_{m'}\text{-}$$

$$\text{-}[O\text{-L-YFC-O-}R_f\text{-CFY-L-O}]P(O)(O^- Z^+)_2 \qquad (B)$$

$$R_f\text{-CFY-L-W} \qquad (C)$$

$$W\text{-L-YFC-O-}R_f\text{-CFY-L-W} \qquad (D)$$

wherein:

m' is an integer from 0 to 20, preferably from 0 to 4;
L is an organic group selected from $-CH_2\text{-}(OCH_2CH_2)_n\text{-}$, $-CO\text{-}NR'\text{-}(CH_2)_q\text{-}$, with R' = H or $C_1\text{-}C_4$ alkyl;
n = 0-8, preferably 1-3, q = 1-8, preferably 1-3;
Z = H, alkaline metal or $NR_4$ group with R = H or $C_1\text{-}C_4$ alkyl; Y = F, $CF_3$;
m = 1, 2, 3, preferably 1, 2;
W is a group $-Si(R_1)_\alpha(OR_2)_{3-\alpha}$ with $\alpha$ = 0, 1, 2, $R_1$ and $R_2$ equal to or different from each other are $C_1\text{-}C_6$ alkyl groups optionally containing one or more ether O, $C_6\text{-}C_{10}$ aryl groups, $C_7\text{-}C_{12}$ alkyl-aryl or aryl-alkyl groups;
Rf has a number average molecular weight in the range 350-8,000, preferably 500-3,000 and comprises repeating units having at least one of the following scruccures,

statistically placed along the chain:

$$(CFXO), (CF_2CF_2O), (CF_2CF_2CF_2O), (CF_2CF_2CF_2CF_2O),$$

$$(CR_4R_5CF_2CF_2O), (CF(CF_3)CF_2O), (CF_2CF(CF_3)O),$$

wherein

$X = F, CF_3$;
$R_4$ and $R_5$, equal to or different from each other, are selected from H, Cl, or perfluoroalkyl having from 1 to 4 carbon atoms.

2. Use according to claim 1, wherein Rf is selected from the following structures:

1) $-(CF_2O)_{a'}-(CF_2CF_2O)_{b'}-$
with a'/b' in the range 0.5-2, extremes included, a' and b' being integers such as to give the above molecular weight;
2) $-(C_3F_6O)_r-(C_2F_4O)_b-(CFXO)_t-$
With r/b = 0.5-2.0; (r+b)/t is comprised between 10-30, b, r and t being integers such as to give the above molecular weight, X has the above meaning;
3) $-(C_3F_6O)_{r'} - (CFXO)_{t'} -$
t' can be 0;
when t' is different from 0 then r'/t' = 10-30,
r' and t' being integers such as to give the above molecular weight; X has the above meaning;
4) $-(OCF_2CF(CF_3))_z-OCF_2(R'f)_y- CF_2O^- (CF(CF_3)CF_2O)_z-$
wherein z is an integer such that the molecular weight is the above one;
y is an integer between 0 and 1 and R'f is a fluoroalkylene group having for example 1-4 carbon atoms;
5) $-(OCF_2CF_2CR_4R_5)_q-OCF_2(R'f)_y-CF_2O- (CR_4R_5CF_2O)_s-$
wherein:

   q and s are integers such that the molecular weight is the above one;
   $R_4$, $R_5$, R'f, y have the above meaning;

6) $-(C_3F_6O)_{r'''}(CFXO)_{t'''}-OCF_2(R'f)_y-CF_2O(CF(CF_3)CF_2O)_{r'''}(CFXO)_{t'''}-$
   wherein r'''/t''' = 10-30,
   r ''' and t''' being integers such as to give the above molecular weight;
   R'f and y having the above meaning.

3. Use according to claims 1-2, wherein in the compounds of structure (A) and (C) the end group of $R_f$ is of the T-O-type, wherein T is a (per)fluoroalkyl group selected from: $-CF_3, -C_2F_5, -C_3F_7, -CF_2Cl, -C_2F_4Cl, -C_3F_6Cl$; optionally one or two F atoms, preferably one, can be substituted by H.

4. Use according to claims 1-3, wherein a mixture of compounds (C) and (D) is used.

5. Use in the treatment of metal substrata according to claims 1-4, wherein the treatment is made by dipping, spin-coating, spraying, padding or brushing.

6. Use according to claims 4, wherein the perfluoropolyether compounds of structure (C) and (D) are applied using formulations with solvent, solvent-water mixtures or prevailingly aqueous formulations.

7. Use according to claim 6, wherein the concentration of the perfluoropolyether compounds of structure (C) and (D) in the formulation is in the range 0.01-15% by weight, preferably 0.1-5% by weight.

8. Use according to claims 1-5, wherein the perfluoropolyether compounds of structure (A) and (B) are applied using aqueous formulations or formulations having a polar solvent.

9. Use according to claim 8, wherein the formulation contains an amount by weight of perfluoropolyether compound of structure (A) and (B) in the range 0.1-10% by weight, preferably 0.5-5%.

10. Use in the treatment of metal substrata and their alloys to confer anti-corrosive properties of the mono- and bifunctional (per)fluoropolyether compounds of claims 1-9.

11. Use according to claim 10, wherein the perfluoropolyecher compounds have structure (C) and (D).

**Patentansprüche**

1. Verwendung von mono- und bifunktionellen (Per)fluorpolyetherverbindungen mit den folgenden Strukturen:

$$[R_f\text{-CFY-L-O}]_m P(O)(O^- Z^+)_{3-m} \qquad (A)$$

$$(O^- Z^+)_2 P(O)[O\text{-L-YFC-O-}R_f\text{-CFY-L-O-}P(O)(O^- Z^+)]_{m'}\text{-}$$

$$\text{-}[O\text{-L-YFC-O-}R_f\text{-CFY-L-O}]P(O)(O^- Z^+)_2 \qquad (B)$$

$$R_f\text{-CFY-L-W} \qquad (C)$$

$$W\text{-L-YFC-O-}R_f\text{-CFY-L-W} \qquad (D)$$

bei der Behandlung von Metallsubstraten und Legierungen davon, um Beschichtungen auf den Substraten zu bilden, wobei:

m' eine ganze Zahl von 0 bis 20, bevorzugt von 0 bis 4, ist;
L ein organischer Rest, ausgewählt aus $-CH_2\text{-}(OCH_2CH_2)_n$- und $-CO\text{-}NR'\text{-}(CH_2)_q$-, ist, wobei R' H oder $C_1$-$C_4$-Alkyl ist;
n = 0 bis 8, bevorzugt 1 bis 3, ist;
q = 1 bis 8, bevorzugt 1 bis 3, ist;
Z H, Alkalimetall oder ein Rest $NR_4$ ist, wobei R H oder $C_1$-$C_4$-Alkyl ist;
Y F oder $CF_3$ ist;
m = 1, 2 oder 3, bevorzugt 1 oder 2 ist;
W ein Rest $-Si(R_1)_\alpha(OR_2)_{3-\alpha}$ ist, wobei $\alpha$ = 0, 1 oder 2 ist, $R_1$ und $R_2$, die gleich oder verschieden voneinander sind, $C_1$-$C_6$-Alkylreste, die gegebenenfalls ein oder mehrere Ethersauerstoffatome enthalten, $C_6$-$C_{10}$-Arylreste, $C_7$-$C_{12}$-Alkyl-aryl- oder -Aryl-alkylreste sind;
$R_f$ ein Zahlenmittel des Molekulargewichts im Bereich 350 bis 8.000, bevorzugt 500 bis 3.000, aufweist und Wiederholungseinheiten mit mindestens einer der folgenden Strukturen umfasst, die statistisch entlang der Kette platziert sind:

$(CFXO)$, $(CF_2CF_2O)$, $(CF_2CF_2CF_2O)$, $(CF_2CF_2CF_2CF_2O)$, $(CR_4R_5CF_2CF_2O)$, $(CF(CF_3)CF_2O)$, $(CF_2CF(CF_3)O)$,

wobei
x F oder $CF_3$ ist;
$R_4$ und $R_5$, die gleich oder verschieden voneinander sind, aus H, Cl oder Perfluoralkyl mit 1 bis 4 Kohlenstoffatomen ausgewählt sind.

2. Verwendung nach Anspruch 1, wobei $R_f$ aus den folgenden Strukturen ausgewählt ist:

1) $-(CF_2O)_{a'}-(CF_2CF_2O)_{b'}-$

wobei a'/b' im Bereich 0,5 bis 2, einschließlich der Grenzwerte, liegt und a' und b' ganze Zahlen sind, sodass sich das vorstehende Molekulargewicht ergibt;

2) $-(C_3F_6O)_r-(C_2F_4O)_b-(CFXO)_t-$

wobei r/b = 0,5 bis 2,0 ist; (r+b)/t zwischen 10 und 30 liegt; b, r und t ganze Zahlen sind, sodass sich das vorstehende Molekulargewicht ergibt; X die vorstehende Bedeutung hat;

3) $-(C_3F_6O)_{r'}-(CFXO)_{t'}-$

wobei t' 0 sein kann; wenn t' von 0 verschieden ist, r'/t' = 10 bis 30 ist; r' und t' ganze Zahlen sind, sodass sich das vorstehende Molekulargewicht ergibt; X die vorstehende Bedeutung hat;

4) $-(OCF_2CF(CF_3))_z-OCF_2(R'_f)_y-CF_2O-(CF(CF_3)CF_2O)_z-$,

wobei z eine ganze Zahl ist, sodass sich das vorstehende Molekulargewicht ergibt; y eine ganze Zahl zwischen 0 und 1 ist und $R'_f$ ein Fluoralkylenrest ist, der zum Beispiel 1 bis 4 Kohlenstoffatome aufweist;

5) $-(OCF_2CF_2CR_4R_5)_q-OCF_2(R'_f)_y-CF_2O-(CR_4R_5CF_2CF_2O)_s-$

wobei q und s ganze Zahlen sind, sodass sich das vorstehende Molekulargewicht ergibt; $R_4$, $R_5$, $R'_f$ und y die vorstehende Bedeutung haben;

6) $-(C_3F_6O)_{r'''}-(CFXO)_{t'''}-OCF_2(R'_f)_y-CF_2O(CF(CF_3)CF_2O)_{r'''}-(CFXO)_{t'''}-$

wobei r'''/t''' = 10 bis 30 ist; r''' und t''' ganze Zahlen sind, sodass sich das vorstehende Molekulargewicht ergibt; $R'_f$ und y die vorstehende Bedeutung haben.

**3.** Verwendung nach den Ansprüchen 1 bis 2, wobei in den Verbindungen der Struktur (A) und (C) die Endgruppe von $R_f$ vom Typ T-O- ist, wobei T ein (Per)fluoralkylrest ist, ausgewählt aus: $-CF_3$, $-C_2F_5$, $-C_3F_7$, $-CF_2Cl$, $-C_2F_4Cl$, $-C_3F_6Cl$; wobei gegebenenfalls ein oder zwei F-Atome, bevorzugt ein F-Atom, durch H ersetzt sein kann.

**4.** Verwendung nach den Ansprüchen 1 bis 3, wobei ein Gemisch von Verbindungen (C) und (D) verwendet wird.

**5.** Verwendung bei der Behandlung von Metallsubstraten nach den Ansprüchen 1 bis 4, wobei die Behandlung durch Eintauchen, Rotationsbeschichten, Sprühen, Tupfen oder Streichen durchgeführt wird.

**6.** Verwendung nach Anspruch 4, wobei die Perfluorpolyetherverbindungen der Struktur (C) und (D) unter Verwendung von Formulierungen mit Lösungsmittel, Lösungsmittel-Wassergemischen oder vorwiegend wässrigen Formulierungen aufgebracht werden.

**7.** Verwendung nach Anspruch 6, wobei die Konzentration der Perfluorpolyetherverbindungen der Struktur (C) und (D) in der Formulierung im Bereich von 0,01 bis 15 Gew.-%, bevorzugt 0,1 bis 5 Gew.-%, liegt.

**8.** Verwendung nach den Ansprüchen 1 bis 5, wobei die Perfluorpolyetherverbindungen der Struktur (A) und (B) unter Verwendung von wässrigen Formulierungen oder Formulierungen mit einem polaren Lösungsmittel aufgebracht werden.

**9.** Verwendung nach Anspruch 8, wobei die Formulierung eine Gewichtsmenge der Perfluorpolyetherverbindung der Struktur (A) und (B) im Bereich 0,1 bis 10 Gew.-%, bevorzugt 0,5 bis 5 Gew.-%, enthält.

**10.** Verwendung der mono- und bifunktionellen (Per)fluorpolyetherverbindungen der Ansprüche 1 bis 9 bei der Behandlung von Metallsubstraten und Legierungen davon, um Antikorrosionseigenschaften zu verleihen.

**11.** Verwendung nach Anspruch 10, wobei die Perfluorpolyetherverbindungen Struktur (C) und (D) aufweisen.

## Revendications

**1.** Utilisation dans le traitement de substrats métalliques et de leurs alliages pour former des revêtements sur lesdits substrats de composés (per)fluoropolyéthers mono- et bifonctionnels ayant les structures suivantes :

$$[R_f\text{-CFY-L-O}]_m P(O)(O^- Z^+)_{3-m} \tag{A}$$

$$(O^-Z^+)_2P(O)[O\text{-}L\text{-}YFC\text{-}O\text{-}R_f\text{-}CFY\text{-}L\text{-}O\text{-}P(O)(O^-Z^+)]_{m'}\text{-}$$

$$\text{-}[O\text{-}L\text{-}YFC\text{-}O\text{-}R_f\text{-}CFY\text{-}L\text{-}O]P(O)(O^-Z^+)_2 \qquad \qquad (B)$$

$$R_f\text{-}CFY\text{-}L\text{-}W \qquad \qquad (C)$$

$$W\text{-}L\text{-}YFC\text{-}O\text{-}R_f\text{-}CFY\text{-}L\text{-}W \qquad \qquad (D)$$

dans lesquelles :

$m'$ est un nombre entier de 0 à 20, de préférence de 0 à 4 ;

L est un groupe organique choisi parmi $-CH_2\text{-}(OCH_2CH_2)_n\text{-}$, $-CO\text{-}NR'\text{-}(CH_2)^q\text{-}$, avec R' = H ou un groupe alkyle en $C_1\text{-}C_4$

$n$ = 0 à 8, de préférence 1 à 3, $q$ = 1 à 8, de préférence 1 à 3 ;

Z = H, un métal alcalin ou un groupe $NR_4$ dans lequel R = H ou un groupe alkyle en $C_1\text{-}C_4$ ; Y = F, $CF_3$ ;

$m$ = 1, 2, 3, de préférence 1, 2 ;

W est un groupe $-Si(R_1)_\alpha(OR_2)_{3-\alpha}$ avec $\alpha$ = 0, 1, 2, $R_1$ et $R_2$ identiques ou différents l'un de l'autre sont des groupes alkyle en $C_1\text{-}C_6$ éventuellement contenant un ou plusieurs oxydes d'éthers , des groupes aryle en $C_6\text{-}C_{10}$, des groupes alkyl-aryle ou aryl-alkyle en $C_7\text{-}C_{12}$ ;

Rf a un poids moléculaire moyen en nombre dans une plage de 350 à 8 000, de préférence de 500 à 3 000, et comprend des motifs répétés ayant au moins une des structures suivantes placées de façon statistique le long de la chaîne :

$(CFXO)$, $(CF_2CF_2O)$, $(CF_2CF_2CF_2O)$, $(CF_2CF_2CF_2CF_2O)$, $(CR_4R_5CF_2CF_2O)$, $(CF(CF_3)CF_2O)$, $(CF_2CF(CF_3)O)$,

dans lesquelles

X = F, CF3 ;

$R_4$ et $R_5$, identiques ou différents l'un de l'autre sont choisis parmi H, Cl, où un groupe perfluoroalkyle ayant de 1 à 4 atomes de carbone.

**2.** Utilisation selon la revendication 1, dans laquelle $R_f$ est choisi parmi les structures suivantes :

1) $-(CF_2O)_{a'}\text{-}(CF_2CF_2O)_{b'}\text{-}$

avec a'/b' dans une plage de 0,5 à 2, extrêmes inclus ; a' et b' étant des nombres entiers tels qu'ils donnent le poids moléculaire ci-dessus ;

2) $-(C_3F_6O)_r\text{-}(C_2F_4O)_b\text{-}(CFXO)_t\text{-}$

avec r/b = 0,5-2,0 ; (r + b)/t est compris entre 10 et 30, b, r et t étant des nombres entiers tels qu'ils donnent le poids moléculaire ci-dessus, X a la signification ci-dessus ;

3) $-(C_3F_6O)_{r'}\text{-}(CFXO)_{t'}\text{-}$

t' peut être 0 ;

quand t'est différent de 0, alors r'/t' = 10 - 30, r' et t'étant des nombres entiers tels qu'ils donnent le poids moléculaire ci-dessus ; X a la signification ci-dessus ;

4) $-(OCF_2CF(CF_3))_z\text{-}OCF_2(R'f)_Y\text{-}CF_2O\text{-}(CF(CF_3)CF_2O)_z\text{-}$

dans laquelle z est un nombre entier tel que le poids moléculaire soit celui donné ci-dessus ;

y est un nombre entier entre 0 et 1 et R'f est un groupe fluoroalkylène ayant par exemple 1 - 4 atomes de carbone ;

5) $-(OCF_2CF_2CR_4R_5)_q\text{-}OCF_2(R'f)_y\text{-}CF_2O\text{-}(CR_4R_5CF_2CF_2O)_s\text{-}$

dans laquelle :

q et s sont des nombres entiers tels que le poids moléculaire soit celui donné ci-dessus ;

$R_4$, $R_5$, R'f, y ont la signification ci-dessus ;

6)-$(C_3F_6O)_{r'''}(CFXO)_{t'''}$-$OCF_2(R'f)_y$-$CF_2O(CF(CF_3)CF_2O)_{r'''}(CFXO)_{t'''}$

dans laquelle r''' et t''' = 10 - 30,

r''' et t''' étant des nombres entiers tels qu'ils donnent le poids moléculaire ci-dessus ;

R'f et y ayant la signification ci-dessus.

3. Utilisation selon les revendications 1 - 2, dans laquelle dans les composés de structures (A) et (C) le groupe terminal de $R_f$ est de type T-O, dans lequel T est un groupe (per)fluoroalkyle choisi parmi : $-CF_3$, $-C_2F_5$, $-C_3F_7$, $-CF_2Cl$, $-C_2F_4Cl$, $-C_3F_6Cl$ ; optionnellement un ou deux atomes de fluor, de préférence un, peu(ven)t être substitué (s) par H.

4. Utilisation selon les revendications 1 - 3, dans laquelle un mélange de composés (C) et (D) est utilisé.

5. Utilisation dans le traitement de substrats métalliques selon les revendications 1 - 4, dans laquelle le traitement est réalisé par immersion, par revêtement par centrifugation, par pulvérisation, par tamponnage ou par brossage.

6. Utilisation selon la revendication 4, dans laquelle les composés perfluoropolyéther de structure (C) et (D) sont appliqués en utilisant des formulations avec un solvant, des mélanges eau-solvant et des formulations à dominante aqueuse.

7. Utilisation selon la revendication 6, dans laquelle la concentration des composés perfluoropolyéther de structure (C) et (D) dans la formulation est dans une plage de 0,01 - 15 % en poids, de préférence de 0,1 à 5 % en poids.

8. Utilisation selon les revendications 1 - 5, dans laquelle les composés perfluoropolyéther de structure (A) et (B) sont appliqués en utilisant des formulations aqueuses ou des formulations ayant un solvant polaire.

9. Utilisation selon la revendication 8, dans laquelle la formulation contient une quantité en poids de composés perfluoropolyéther de structure (A) et (B) dans la plage de 0,1 à 10 % en poids, de préférence de 0,5 à 5 %.

10. Utilisation dans le traitement des substrats métalliques et de leurs alliages, pour leur conférer des propriétés anticorrosives, de composés (per)fluoropolyéther mono- et bifonctionnels selon l'une quelconque des revendications 1 - 9.

11. Utilisation selon la revendication 10, dans laquelle les composés perfluoropolyéther ont la structure (C) et (D).